**Europäisches Patentamt**

(19) **European Patent Office**

**Office européen des brevets**

(11) Veröffentlichungsnummer: **0 176 707**

**B1**

(12) # EUROPÄISCHE PATENTSCHRIFT

(45) Veröffentlichungstag der Patentschrift:
25.01.89

(51) Int. Cl.⁴: **B 01 J 8/28**

(21) Anmeldenummer: **85109976.2**

(22) Anmeldetag: **06.08.85**

(54) **Kontinuierliches Verfahren zur mehrstufigen Behandlung feinteiliger Feststoffe mit Gasen.**

(30) Priorität: **29.09.84 DE 3435862**

(43) Veröffentlichungstag der Anmeldung:
**09.04.86 Patentblatt 86/15**

(45) Bekanntmachung des Hinweises auf die Patenterteilung:
**25.01.89 Patentblatt 89/4**

(84) Benannte Vertragsstaaten:
**DE FR GB IT NL SE**

(56) Entgegenhaltungen:
**EP-A-0 059 757**
**DE-A-2 813 227**
**US-A-2 665 288**
**US-A-4 321 233**

(73) Patentinhaber: **Degussa Aktiengesellschaft, Weissfrauenstrasse 9, D-6000 Frankfurt am Main 1 (DE)**

(72) Erfinder: **Voll, Manfred, Dr., Lindenstrasse 3, D-6455 Erlensee (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Did Erfindung betrifft ein kontinuierliches Verfahren zu einer aufeinanderfolgenden Behandlung von mit geringen Gasgeschwindigkeiten von 0,5 - 10, vorzugsweise 1 - 5 cm sec., fluidisierbaren feinteiligen Feststoffen mit mindestens zwei verschiedenen Gasen oder Gasgemischen in einem auf konstantes Niveau geregelten Fließbett im Gegenstrom.

Das Verfahren bezweckt in einem einzigen Arbeitsgang eine mehrstufige Behandlung des Feststoffes in aufeinanderfolgenden Zonen mit Gasen unterschiedlicher Zusammensetzung, wobei in den Behandlungszonen gleiche oder verschiedene Temperaturen vorliegen können. Es gestattet somit die Zusammenfassung bisher getrennt durchgeführter Operationen an leicht fluidisierbaren Feststoffen, wie Ruß oder feinteiligen Oxiden, wie pyrogenen Kieselsäuren, Zirkonoxid, Titanoxid, Aluminiumoxid und anderen.

Unter solche Einzeloperationen fallen sowohl chemische wie physikalisch-chemische Oberflächenbehandlungen, wie Oberflächenoxidation, Hydrophobierung, Adsorption, Desorption, Temperung, etc. Häufig bedarf es einer Abfolge mehrerer dieser Operationen, um einen Feststoff mit ganz bestimmten Oberflächeneigenschaften zu erzeugen. Beispiele für solche bisher getrennt voneinander durchgeführte Behandlungen sind:

A) Bei der Nachbehandlung von Rußen
1. Trocknung
2. Oberflächenoxidation mit Stickoxid/Luft-Gemischen
3. Desorption noch anhaftenden Stickoxids;
B) Bei der Hydrophobierung pyrogener Kieselsäuren
1. Trocknung unter teilweiser Kondensation oberflächenständiger Silanolgruppen
2. Umsetzung mit alkylierten Halogensilanen oder Silazanen o. ä.
3. Falls erforderlich, Entsäuerung;
C) Bei gewissen Verfahren zur Absenkung des sogenannten Extraktgehalts von Rußen
1. Behandlung mit überhitztem Wasserdampf
2. Behandlung mit Heißluft.

Die Erfindung eröffnet einen Weg zur Durchführung mehrerer solcher Operationen in einem einzigen, kontinuierlich arbeitenden Verfahren. Damit wird gegenüber dem gegebenen Stand der Technik eine erhebliche Vereinfachung und Erhöhung der Wirtschaftlichkeit ermöglicht.

Gegenstand der Erfindung ist ein kontinuierliches Verfahren zu einer aufeinanderfolgenden Behandlung von mit geringen Gasgeschwindigkeiten von 0,5 - 10, vorzugsweise 1 - 5 cm/sec., fluidisierbaren feinteiligen Feststoffen mit mindestens zwei verschiedenen Gasen oder Gasgemischen in einem auf konstantes Niveau geregelten Fließbett im Gegenstrom. Das Verfahren ist dadurch gekennzeichnet, daß man die einzelnen Behandlungsgase verschiedenen Zonen der Behandlungsstrecke zuführt, wobei das Verhältnis von Gasdurchsatz zu Reaktorquerschnittsfläche A der Gelichung

$$A = \frac{Qg}{F} = \frac{P \times To \times 3600}{Po \times (T + 273)} \times S \quad (1)$$

S = Strömungsgeschwindigkeit (m/sec)
A = Verhältnis von Gasdurchsatz (Nm³/h) zu Reaktorquerschnittsfläche (m²)
Qg = Gasdurchsatz (Nm³/h)
F = Reaktorquerschnittsfläche (m²)
P = Reaktordruck (bar, abs.)
Po = Normaldruck (bar, abs.)
T = Reaktortemperatur (grad C)
To = Normaltemperatur (O grad C)
folgt, die Strömungsgeschwindigkeit S für alle Zonen im wesentlichen gleich ist und in dem genannten Bereich liegt und das Reaktorvolumen V je Zone der Gleichung

$$V = \frac{Qf \times t}{d} \quad (2)$$

Qf = Feststoffdurchsatz (kg/h)
d = Feststoffdichte im fluidisierten Zustand (kg/m³)
t = Verweilzeit (h)

entspricht, wobei Qf für alle Zonen gleich ist und Gasdurchsatz, Reaktorquerschnittsfläche und Verweilzeit in jeder Zone verschieden sind.

Das erfindungsgemäße Verfahren benutzt zur Einstellung eines konstanten Niveaus des fluidisierten Feststoffes einen für die vorherrschenden Bedingungen jeweils geeigneten Signalgeber, mit dessen Signal eine Schleuse für den feinteiligen Feststoff angesteuert wird. Dabei sind zwei Betriebsweisen möglich. Die erste sieht vor, daß man den behandelten Feststoff in zeitlich konstantem Massenstrom austrägt und den Ausgangsfeststoff in einer solchen Menge einspeist, daß das Niveau des Fließbettes konstant gehalten wird. Die zweite Betriebsweise besteht darin, daß man den Ausgangsfeststoff in zeitlich konstantem Massenstrom einträgt und den behandelten Feststoff in einer solchen Menge austrägt, daß das Niveau des Fließbetts konstant gehalten wird.

Die Bemessung von Querschnitt und Länge der einzelnen Behandlungszonen setzt in dem erfindungsgemäßen Arbeitsverfahren bei einem gegebenen System von Feststoff und Gasen lediglich die Kenntnis folgender Parameterwerte voraus:

1. Gewünschter Feststoffdurchsatz
2. Gas/Feststoff-Verhältnis
3. Behandlungstemperatur
4. Optimale Gasgeschwindigkeit zur Fluidisierung des Feststoffs
5. Verweilzeit
6. Feststoffdichte im fluidisierten Zustand.

Für jede Behandlungszone ergibt sich aus dem gewünschten Feststoffdurchsatz und dem Gas/Feststoff-Verhältnis der erforderliche Gasdurchsatz, aus diesem, der Temperatur und der Gasgeschwindigkeit zur Fluidisierung der Durchmesser der jeweiligen Behandlungszone und aus dem Querschnitt, der Verweilzeit und der Feststoffdichte im fluidisierten Zustand die Länge der Behandlungszone.

Die zur Berechnung benutzten Daten mit Ausnahme des freiwählbaren Feststoffdurchsatzes müssen experimentell bestimmt werden, können aber auch aus bekannten Einzelstufen übertragen werden.

Mit der Zusammenfassung der einzelnen Behandlungsschritte in einer einzigen Apparatur entfallen vor allem der Feststofftransport zwischen den Apparaturen getrennter Verfahrensstufen und mehrfache Dosiervorgänge. Der Umfang der erforderlichen Apparaturen wird erheblich verkleinert. Eine Abstimmung des Betriebsdrucks zwischen einzelnen Apparaturblöcken entfällt. Das Verfahren ist jedoch auf die Aufeinanderfolge von Behandlungsstufen begrenzt, bei denen das Abgas einer Behandlungsstufe in der oder den folgenden Behandlungsstufen nicht stört.

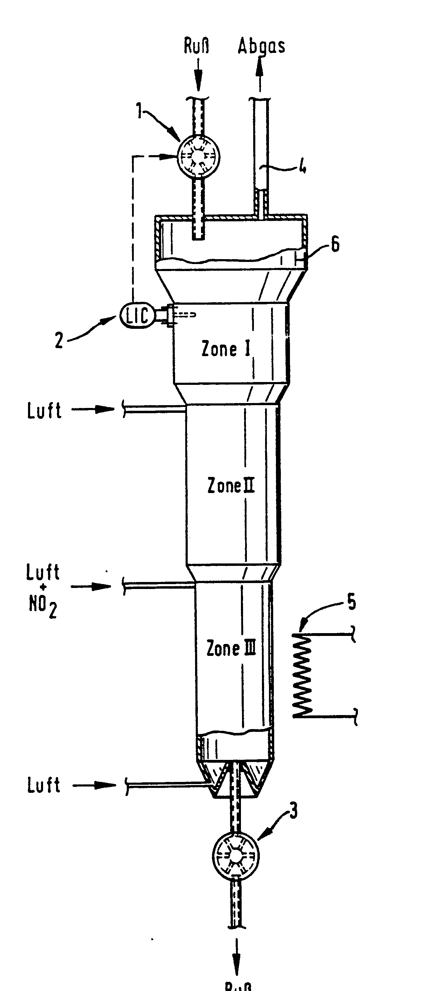

Für die Auslegung einer Apparatur zur Durchführung des Verfahrens wird nachfolgend in Verbindung mit der Zeichnung ein Beispiel gegeben.

## Beispiel

Das Verfahren, das auf die verschiedensten Gas/Feststoff-Reaktionen anwendbar ist, wird am Beispiel eines dreistufigen Fließbettreaktors für die Oxidation von Ruß mit Luft und $NO_2$ (als Katalysator) und die anschließende Desorption von überschüssigem $NO_2$ erläutert.

Gemäß der einzigen Figur der Zeichnung wird der Ruß mit Hilfe der Schleuse 1 in den Reaktor eingespeist. Die Schleuse wird von einem Niveauschalter (LIC) 2 mit einem optischen Signalgeber gemäß der deutschen Patentanmeldung P 34 23 580.9 - 41 angesteuert. Nach Durchlaufen der drei mit den jeweiligen gasförmigen Behandlungsagenzien beaufschlagten Reaktionszonen I, II und III wird das Endprodukt über eine mit konstanter Drehzahl laufende Austragsschleuse 3 ausgetragen. Das gesamte Abgas des Reaktors wird am Kopf über eine Leitung 4 abgeführt.

In der Zone I wird eine Voroxidation des sehr reaktionsfähigen Ausgangsrußes mit Luft durchgeführt.

In der Zone II wird die Hauptreaktion, nämlich die Oxidation des Rußes mit Luft und $NO_2$ durchgeführt.

In der Zone III wird das an dem in Zone II oxidierten Ruß noch anhaftende $NO_2$ im Fluidisierungsmittel Luft desorbiert.

Die Fluidisierungsluft wird am unteren Ende der Zone III über mehrere (nicht gezeigte) tangentiale Einlässe zugeführt und strömt mit niedriger Geschwindigkeit aufwärts.

Neben dem Inschwebehalten des feinteiligen Feststoffes unterstützt sie die Desorption, indem sie das abgelöste $NO_2$ in die Reaktionszone II zurückführt.

Da die Desorption schwach endotherm ist, wird Zone III durch eine Heizung 5 auf der Desorptionstemperatur gehalten.

Am unteren Ende der Zone II wird, ebenfalls über mehrere tangentiale Einlässe, Luft und $NO_2$ eingeleitet. Die $NO_2$-Konzentration in dieser Luft wird so gewählt, daß sich nach der Durchmischung der (das desorbierte $NO_2$ enthaltenden) Luft aus Zone III die gewünschte Behandlungskonzentration einstellt.

Da das aus Zone II in die Zone I strömende Gas schon weitgehend an Sauerstoff verarmt ist, wird für die Voroxidation des Rußes am Fuß der Zone I weitere Luft über tangentiale Einlässe eingespeist.

In den Zonen II und I wird Wärme erzeugt, so daß bei geeigneter Isolierung keine Heizung erforderlich ist, um die Reaktionstemperatur aufrecht zu erhalten.

Oberhalb der Zone I befindet sich eine gegenüber dieser erweiterte Beruhigungszone 6, in der sich, aufgrund des Niveauschalter-gesteuerten Rußeintrags kein fluidisierter Ruß mehr befindet und in der die Strömungsgeschwindigkeit der Gase so weit unter die Sinkgeschwindigkeit der Feststoffteilchen verringert wird, daß praktisch kein Feststoff durch die Abgasleitung ausgetragen wird.

Die für die Auslegung des Reaktors notwendigen Daten, nämlich der gewünschte Feststoffdurchsatz (a) und die experimentell ermittelten oder aus bekannten Einzelstufen übertragbaren Prozeßparameter (b) bis (f), sind im oberen Teil der folgenden Tabelle getrennt für jede Reaktionszone aufgeführt.

3

**Tabelle**

| | Zone III | Zone II | Zone I |
|---|---|---|---|
| (a) Feststoffdurchsatz (kg)h) | 12 | 12 | 12 |
| (b) Gas/Feststoff-Verhältnis (Nm³/kg) | 0,30 | 0,44 | 0,72 |
| (c) Temperatur (grad C) | 275 | 250 | 240 |
| (d) Strömungsgeschwindigkeit der Gase (cm/sec) | 1,6 | 1,4 | 1,6 |
| (e) Verweilzeit des Feststoffs (h) | 0,5 | 1,0 | 0,5 |
| (f) Dichte des Feststoffs im fluidisierten Zustand (kg/m³) | 13 | 15 | 15 |
| (g) Gasdurchsatz (Nm³/h) | 3,64 | 5,22 | 8,57 |
| (h) Gaseinspeisung (Nm³/h) | 3,64 | 1,58 | 3,35 |
| (i) Reaktordurchmesser (mm) | 401 | 501 | 596 |
| (k) Länge der Reaktionszone (m) | 3,67 | 4,07 | 1,42 |

Im unteren Teil der Tabelle sind die aus den Ausgangsdaten (a) bis (f) berechneten Auslegedaten (g) bis (k) aufgeführt. Dabei ist vorausgesetzt, daß der Reaktor bei Normaldruck betrieben wird. Die Gasdurchsätze (g) ergeben sich aus dem gewünschten Feststoffdurchsatz (a) von 12 kg/h und dem experimentell ermittelten günstigsten Gas/Feststoff-Verhältnis (b) für jede Zone. Die in jeder Zone notwendige Gaseinspeisung (h) ergibt sich als Differenz zwischen dem Gasdurchsatz (g) in der betreffenden Zone und dem Gasdurchsatz der im Reaktor darunterliegenden Zone.

So muß in die Zone II beispielsweise ein Gasvolumen von 1,58 Nm³/h eingeführt werden, damit sich zusammen mit dem aus Zone III kommenden Gasvolumen von 3,64 Nm³/h berechnete Gasdurchsatz von 5,22 Nm³/h ergibt. Wenn in der Zone II eine $NO_2$-Behandlungskonzentration von 3,7 Vol.% eingestellt werden soll, muß das in II eingeführte Gas 12,2 Vol.% $NO_2$ enthalten.

Der Durchmesser (i) der einzelnen Reaktionszonen III, II und I - berechnet aus dem Gasdurchsatz (g), der experimentell ermittelten optimalen Strömungsgeschwindigkeit (d) und der Temperatur (c) - beträgt im vorliegenden Modellfall 401, 501 bzw. 596 mm.

Aus dem Feststoffdurchsatz (a), der Dichte des Feststoffs im fluidisierten Zustand (f) unter den in der jeweiligen Stufe herrschenden Temperatur- und Strömungsbedingungen und der zur Durchführung der jeweiligen Reaktion benötigten Verweilzeit (e) wurde die in der Tabelle aufgeführte Länge der einzelnen Reaktionszonen (k) berechnet.

Da in dem gegebenen Beispiel die durch Reaktion verbrauchten Gasmengen (Luftsauerstoff), bezogen auf den Gesamtgasdurchsatz, relativ gering sind, wurde der Verbrauch in den Rechnungen vernachlässigt. Prinzipiell kann aber, um die für die Fluidisierung notwendige Strömungsgeschwindigkeit aufrechtzuerhalten, bei Reaktionen, die mit einem erheblichen Gasverbrauch verbunden sind, eine Verengung der Reaktionszone nach oben hin bzw. die zusätzliche Einspeisung von Gasen entlang einer nicht erweiterten Reaktionszone notwendig sein.

**Patentanspruch**

1. Kontinuierliches Verfahren zu einer aufeinanderfolgenden Behandlung von mit geringen Gasgeschwindigkeiten von 0,005 - 0,1 m/sec fluidisierbaren feinteiligen Feststoffen mit mindestens 2 verschiedenen Gasen oder Gasgemischen in einem auf konstantes Niveau geregelten Fließbett im Gegenstrom,
   dadurch gekennzeichnet,
   daß man die einzelnen Behandlungsgase verschiedenen Zonen der Behandlungsstrecke zuführt, wobei das Verhältnis von Gasdurchsatz zu Reaktorquerschnittsfläche A der Gleichung

$$A = \frac{Qg}{F} = \frac{P \times T_0 \times 3600}{P_0 \times (T + 273)} \times S \quad (1)$$

S = Strömungsgeschwindigkeit (m/sec)
A = Verhältnis von Gasdurchsatz (Nm³/h) zu Reaktorquerschnittsfläche (m²)
Qg = Gasdurchsatz (Nm³/h)
F = Reaktorquerschnittsfläche (m²)
P = Reaktordruck (bar, abs.)
Po = Normaldruck (bar, abs.)
T = Reaktortemperatur (grad C)
To = Normaltemperatur (0 grad C)
folgt, die Strömungsgeschwindigkeit S für alle Zonen im wesentlichen gleich ist und in dem genannten Bereich liegt und das Reaktorvolumen V je Zone der Gleichung

$$V = \frac{Qf \times t}{d} \quad (2)$$

Qf = Feststoffdurchsatz (kg/h)
d = Feststoffdichte im fluidisierten Zustand (kg/m$^3$)
t = Verweilzeit (h)
entspricht,wobei Qf für alle Zonen gleich ist und Gasdurchsatz, Reaktorquerschnittsfläche und Verweilzeit in jeder Zone verschieden sind.

**Claim**

1. Continuous process for sequentially treating finely disperse solids, fluidizable at low gas velocities of 0.005 - 0.1 m/second, with at least two different gases or gas mixtures in countercurrent in a fluid bed controlled at constant level, characterized in that the individual treatment gases are fed to different zones of the treatment section, the ratio of gas throughput to the cross-sectional area A of the reactor being in accordance with the equation

$$A = \frac{Q_g}{F} = \frac{P \times T_o \times 3600}{P_o \times (T + 273)} \times S \ (1)$$

S = flow velocity (m/second)
A = ratio of gas throughput (M$^3$(S.T.P.)/lhour to the cross-sectional area of the reactor (m$^2$)
Qg = gas throughput (m$^3$(S.T.P.)/hour)
F = cross-sectional area of the reactor (m$^2$)
P = reactor pressure (bar absolute)
Po = normal pressure (bar absolute)
T = reactor temperature (degrees C)
To = normal temperature (0 degrees C),
the flow velocity S being substantially the same for all the zones and being within the said range, and the reactor volume V per zone corresponding to the equation

$$V = \frac{Q_f \times t}{d} \ (2)$$

Qf = solids throughput (kg/hour)
d = solids density in the fluidized state (kg/m$^3$)
t = residence time (hours),
Qf being the same for all the zones, and the gas throughput, the cross-sectional area of the reactor and the residence time being different in each zone.

**Revendication**

1. Procédé en continu pour le traitement successif de substances solides finement dispersées fluidisables avec des vitesses de gaz faibles de 0,005 à 0,1 m/sec, avec au moins deux gaz ou mélanges de gaz différents dans un lit fluidisé réglé à un niveau constant en contre-courant, caractérisé en ce que l'on amène les gaz de traitement individuels aux diverses zones de parcours de traitement, pour lesquelles le rapport d'addition de gaz à la surface du plan transversal du réacteur A suivant l'équation:

$$A = \frac{Q_g}{F} = \frac{P \times T_o \times 3600}{P_o \times (T + 273)} \times S \ (1)$$

S = Vitesse du courant (m/sec)
A = Rapport de l'addition du gaz en Nm$^3$/h à la surface du plan transversal du réacteur (m$^2$)
Qg = Addition de gaz (Nm$^3$/h)
F = Surface du plan transversal du réacteur (m$^2$)
P = Pression du réacteur (Bar. absolu)
Po = Pression normale (Bar. absolu)
T = Température du réacteur (en grade C)
$T_o$ = Température normale (0 grade C),
La vitesse d'écoulement S est égale essentiellement pour toutes les zones et se situe dans la zone mentionnée et le volume de réacteur V correspond selon la zone de l'équation à:

$$V = \frac{Q_f \times t}{d} \ (2)$$

Qf = addition de substance solide en Kg/h,
d = épaisseur de substance solide à l'état fluidisé (kg/m$^3$)
t = temps de séjour (h)
pour laquelle $Q_f$ est égal pour toutes les zones et l'addition de gaz, la surface du plan transversal du réacteur et le temps de séjour dans chaque zone sont différents.

Ruß   Abgas